# EUROPEAN PATENT SPECIFICATION

(11) **EP 3 576 102 B1**
(45) Date of publication and mention of the grant of the patent: **11.03.2026**
(21) Application number: 17894298.3
(22) Date of filing: 24.01.2017
(51) Int. Cl.: G21C 7/00, G06F 13/38, G06F 9/4401

(54) **CONTROLLER BOARD CARD FOR REACTOR PROTECTION SYSTEM OF NUCLEAR POWER PLANT, AND CONTROL METHOD**
CONTROLLERPLATINENKARTE FÜR REAKTORSCHUTZSYSTEM EINES KERNKRAFTWERKS UND STEUERUNGSVERFAHREN
CARTE DE PANNEAU DE COMMANDE POUR SYSTÈME DE PROTECTION DE RÉACTEUR DE CENTRALE NUCLÉAIRE ET PROCÉDÉ DE COMMANDE

(43) Date of publication of application: 04.12.2019
(73) Proprietor: China Techenergy Co., Ltd, Beijing 100094 (CN); China General Nuclear Power Corporation (CGN), Shenzhen, Guangdong 518027 (CN)
(72) Inventor: JIANG, Guojin, Beijing 100094 (CN); LU, Decai, Beijing 100094 (CN); ZUO, Xin, Beijing 100094 (CN); ZHANG, Bin, Beijing 100094 (CN); HAN, Bin, Beijing 100094 (CN); LI, Gang, Beijing 100094 (CN); XIE, Yiqin, Beijing 100094 (CN)
(74) Representative: Beck & Rössig European Patent Attorneys
(86) International application number: PCT/CN2017/072491
(87) International publication number: WO 2018/137143

(56) References cited:
- CN-A- 101 231 525
- CN-A- 101 231 525
- CN-A- 102 081 383
- CN-A- 102 081 383
- CN-A- 102 981 498
- CN-A- 106 257 367
- CN-A- 106 909 102
- US-A- 4 574 068
- US-A1- 2002 133 583
- US-A1- 2005 125 575
- US-A1- 2005 281 368
- US-B1- 6 205 483

## Description

### FIELD OF INVENTION

Embodiments of the present disclosure relate to the field of nuclear power technologies, and in particular, to a controller board and a control method for a reactor protection system of a nuclear power plant.

### BACKGROUND ART

Requirements for high reliability, high availability, and high safety of nuclear power plant instrument control systems have placed digital control protection technology of nuclear power plants at the forefront in development of modern control systems, among which a reactor protection system plays an important role. A reactor protection system monitors parameters related to safety of reactors. When these parameters exceed preset protection threshold values, the reactor protection system automatically triggers an emergency shutdown and starts corresponding safety measures to contain progress of accidents, to mitigate consequences of the accidents, and to prevent release of radioactive substances to surrounding environment, thereby ensuring safety of equipment and personnel.

A distributed control system (DCS) is used in a reactor protection system, which is divided into a platform part and an application part. The platform part implements general functions of a protection system board (such as establishing internal communication protocol of the board), and the application part implements field specific functions of the protection system board (such as field requirements of a two out of four logic). In this, an engineer station is set up in the system. When there is a field change in the application part, the controller board installed in the engineer station can be used to implement corresponding function modification. Such modification of the controller board function by way of the engineer station decreases safety of a protection system on the one hand. On the other hand, each controller board needs to correspond to an independent configuration. Thus, the workload is increased, maintenance is complicated, and management is difficult and human errors easily occur. In order to avoid occurrence of the above situation as much as possible and to decrease the complexity of the protection system, an idea of eliminating the engineer station and undertaking custom development is adopted. That is, the protection system as a whole is not divided into a platform part and an application part. The protection system integrates the platform and algorithmic logic corresponding to the application onto a controller board, with no need of installing an engineer station, thereby simplifying architecture design and increasing system safety.

US2002/133583A1 describes a system for allocating applications in a networking chassis, whereby different modules of the networking chassis are connected to perform intermodule communication, but also to appear as a single entity to the outside world. US2005/0125575A1 describes a method for a dynamic assignment of slot-dependent static port addresses, where a unique IP address is generated by a software algorithm. CN102081383A relates to a device and a method for a secure network protocol for field control. CN101231525A relates to an implementation method of a real-time database of a controller in a distributed control system (DCS).

Algorithmic logic corresponding to applications in the controller board usually includes logic processing (such as threshold comparison, maximum value, etc.), net address, and function definitions. Since the controller boards for each channel of the protection system communicate with one another, if net addresses and function definitions are identical, communication address conflict will result and communication will fail. In order to ensure normal operation of the protection system, different algorithmic logics corresponding to the applications need to be set for each controller board, thereby increasing the number of the controller board types. Consequently, the number of components in controller boards will increase, making field maintenance more difficult.

### SUMMARY OF INVENTION

An aspect of embodiments of the present disclosure provide a controller board and a control method for a reactor protection system in a nuclear power plant, so as to address problems of many types of controller boards being used making maintenance inconvenient of existing reactor protection systems in the in a nuclear power plant.

According to an aspect of embodiments of the present disclosure, a controller board for a reactor protection system of a nuclear power plant is provided, including: a memory, configured for storing application information, wherein the application information includes a unique address of a current controller board, information on a controllable devices of the current controller board, and information on functions set by the current controller board for network ports of the controllable devices ; a processor, configured for, after the current controller board is inserted into the controllable device, an address is set for the network port of the controllable device according to a unique address of the current controller board, and a function for the network port of the controllable device is set according to the information on functions set for the network port of the controllable device. board, on which application information on each controller board is stored, including a unique address of a current controller board, information on controllable devices of the current controller, and information on functions set by the current controller for the network ports of the controllable devices. By using a unique address, the current controller board can determine unique addresses for respective network ports of a controllable device according to the unique address of the current controller board, whenever the current controller board is inserted into any controllable device or is changed for any controllable device. By setting the information on functions for a network port of a controllable device, the functions of each network port of the controllable device can be reset after the current controller board is inserted, regardless of what functions are previously performed on the network port, such that the network ports are respectively utilized with flexibility. Based on the reassigned network port address and functions, on the one hand, when controller boards for channels of a protection system communicate with one another, the network port addresses and function definitions are guaranteed to be different, so that communication failure caused by conflicts in communication addresses are avoided; on the other hand, each controller board can perform address assignment and function setting for the network port of the current device according to the information on the controllable device and the information on functions set for the network port of the controllable device, with no need of setting different algorithmic logic corresponding to applications, thereby reducing types and number of controller boards, reducing the number of components on a controller board, and simplifying management and maintenance of the reactor protection system of the nuclear power plant.

### BRIEF DESCRIPTION OF THE DRAWINGS

FIG. 1 is a structural diagram of a controller board for a reactor protection system of a nuclear power plant according to an embodiment of the present disclosure;
FIG. 2 is a flow chart of a control method for a reactor protection system of a nuclear power plant according to an embodiment of the present disclosure.

### DETAILED DESCRIPTION OF THE PREFERRED EMBODIMENTS

Embodying modes of the present disclosure are further described in detail below with reference to the accompanying drawings and embodiments, wherein like elements are indicated with like reference numerals throughout the drawings. The following embodiments are intended for illustrating the present disclosure only.

Those skilled in the art can appreciate that terms such as "a first", "a second", and the like in the present disclosure are merely used to distinguish different steps, devices or modules, etc.. Neither do they represent any specific technical meanings, nor do they indicate necessary logical order between them.

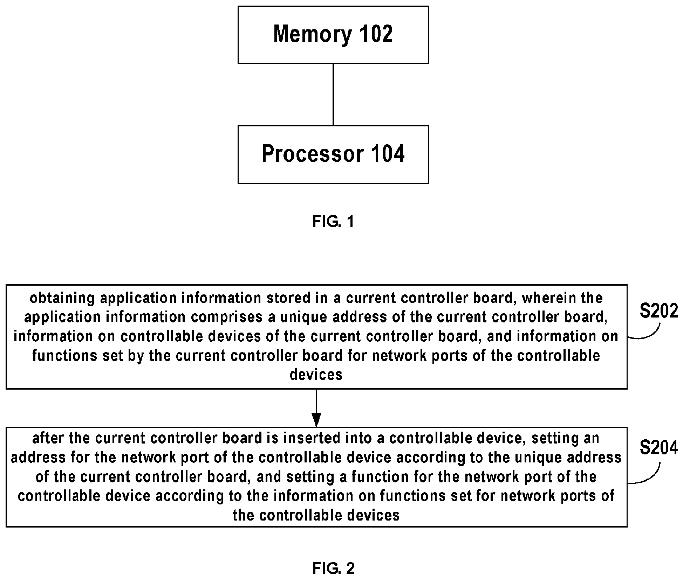

Referring to FIG. 1, a structural diagram of a controller board for a reactor protection system of a nuclear power plant according to an embodiment of the present disclosure is illustrated.

The controller board according to the present embodiment includes a memory 102 and a processor 104. The memory 102 is configured for storing application information, wherein the application information includes a unique address of a current controller board, information on controllable devices of the current controller board, and information on functions set by the current controller board for a network port of the controllable device. The processor 104 is configured for, after the current controller board is inserted into a controllable device, setting an address for the network port of the controllable device according to the unique address of the current controller board, and setting a function for the network port of the controllable device according to the information on functions set for the network port of the controllable device.

Here the address of the current controller board is set by a dial switch (DIP switch) on a chassis, which cannot be easily modified later, once the setting is completed. The address set by the DIP switch can uniquely identify the current controller board as unique address of the current controller board.

In a reactor protection system of a nuclear power plant, the controller board can perform control of some of the devices, which become controllable devices of the controller board, such as a signal processing device, a logic compliance device, a channel monitoring device, a post-accident monitoring device, a channel monitoring display unit, a safety display device and the like. In actual control, the controller board according to the present embodiment can control at least one of these devices.

Each controllable device has a corresponding network port. Different from the fact that each conventional controllable device has a fixed controller board, so that the network port address and function of the controllable device are also fixed, according to embodiments of the present disclosure, each controller board stores information on controllable devices which it can control, and information about the functions set for network ports corresponding to each of the controllable devices. Therefore, after a controller board is inserted into a device, a processor of the controller board can obtain relevant information on the device, including information on the device itself, such as device type, etc., and information on the network port of the device, such as a number of network ports, etc.. Further, whether the device is a controllable device of the current controller board is determined according to the relevant information. If it is, on one hand, an address for the network port of the controllable device is set according to a unique address of the current controller board; on the other hand, a function for the network port of the controllable device is set according to the information on functions set for the network port of the controllable device. That is to say, after the current controller board is inserted into a controllable device, the processor 104 can obtain information on the network port of the controllable device, set an address for the network port of the controllable device according to a unique address of the current controller board, and set a function for the network port of the controllable device according to the information on the functions set for the network port of the controllable device.

Wherein, the functions set by the current controller for the network port of the controllable device include a receiving function and a transmitting function. Such application information further includes source address information on a source device corresponding to a network port of the receiving function, and target address information on a target device corresponding to the network port of the transmitting function. In this case, the processor 104 is further configured for receiving data from the source address through the network port of the receiving function, and transmitting data to the target address through the network port of the transmitting function.

Hereinafter, the above controller board according to an embodiment of the present disclosure will be further described in a form of a specific example.

In this example, the current controller board determines a communication address for the network port of a device (such as a signal processing device) where the controller board resides according to its unique address, it determines a function (a transmitting function or a receiving function) for each network port, and then determines a relationship between upstream devices and downstream devices with respect to the network port according to the determined function, that is, the address of the other party.

In particular, the application information corresponding to each controller board is pre-written into the controller board, such as the memory of the controller. When started, the controller board first reads an address of the controller board, invokes relevant information (such as information on functions set by the current controller board for a network port of a device) based on the address, and assigns values to the network port of the device according to the relevant information. The assigned values include an address of a network port, whether a function of the network port is receiving data or transmitting data, and if receiving data, what the network port address of the other party is, namely what the source address is, if transmitting data, what the network port address of the other party is, namely what the target address is.

Wherein, since communication addresses of network ports are in a one-to-one correspondence with an address of the controller board, which is set by a DIP switch on the chassis, they (communication addresses) cannot be easily modified once the setting is completed. Therefore, addresses on the current controller board corresponding with respective devices are first determined, so that the current controller board for each device is uniquely identified by the address. Then, connection relationships between the respective network ports corresponding to respective devices are determined, whether the network port is used for transmitting or receiving is determined. Here, each network port can be used for both transmitting and receiving. However, in a particular system, once its function is determined, it cannot be converted. For example, if a network port is determined to be used for transmitting in a system, it can only perform the transmitting function but not the receiving function. If it is used for transmitting, the target address of the network port downstream should also be determined. If it is used for receiving, the source address of the network port upstream should also be determined.

Therefore, the controller boards corresponding to different channels have different communication addresses assigned to their respective network ports, as the controller boards have different addresses respectively. For example, the address of the first network port on the third slot for channel A in a signal processing device is ID11_3_1 (wherein, the address of the controller board is 11), and the address in the same position of channel B in the signal processing device is ID21_3_1 (wherein, the address of the controller board is 21). Consequently, communication chaos caused by repeated communication addresses of the network ports can be avoided. At the same time, the position of a controller board in the system is determined according to the different addresses of each controller board, and communication relationships of upstream devices and downstream devices are established.

For example, a controller board A with an address ID-A is set to control a plurality of devices including a signal processing device, a logic compliance device, a channel monitoring device, a post-accident monitoring device, a channel monitoring display unit and a safety display device in a protection system, the plurality of devices having network ports. Assuming that each device has four network ports, the controller board A can control each device to have two network ports for transmitting data and two network ports for receiving data. A device X is set to have network ports X1, X2, X3, and X4. When the controller board A is newly inserted into the device X, addresses for the network ports X1, X2, X3, and X4 are determined, the network ports X1 and X2 are set for transmitting data and X3 and X4 are set for receiving data. Also, it is determined to which target address data is transmitted via the network ports X1 and X2, and from which source address data is received via the network ports X3 and X4.

To this end, suppose that a plurality of devices form four channels A, B, C, and D of a protection system. According to the present embodiment, the controller board in a device corresponding to channel A, such as a signal processing device, can be readily inserted into a device corresponding to channel B, such as a signal processing device, and operates normally, with no need for any modification. Therefore, types of controller boards and the number of components are reduced to a minimum. For instance, there are two pieces for each board type, only 36 pieces of controller boards will be needed to meet requirements for two reactors. Compared to a requirement of original 176 pieces of components, a reduction of 79.5% is resulted. In the meantime, the maintainability of the protection system is increased and the probability of risks due to human error is reduced. Since the number of components is decreased, field components management becomes simpler, maintainability of the protection system is increased, and the probability of risks due to human error of taking a wrong spare part is decreased.

In summary, according to the controller board provided in embodiments of the present disclosure, a reactor protection system of a nuclear power plant integrates a platform and algorithmic logic corresponding to applications onto each controller board, on which application information on each controller board is stored, including a unique address of a current controller board, information on controllable devices of the current controller, and information on functions set by the current controller for the network ports of the controllable devices. By using a unique address, the current controller board can determine unique addresses for respective network ports of a controllable device according to the unique address of the current controller board, whenever the current controller board is inserted into any controllable device or is changed for any controllable device. By setting the information on functions for a network port of a controllable device, the functions of each network port of the controllable device can be reset after the current controller board is inserted, regardless of what functions are previously performed on the network port, such that the network ports are respectively utilized with flexibility. Based on the reassigned network port address and functions, on the one hand, when controller boards for channels of a protection system communicate with one another, the network port addresses and function definitions are guaranteed to be different, so that communication failure caused by conflicts in communication addresses are avoided; on the other hand, each controller board can perform address assignment and function setting for the network port of the current device according to the information on the controllable device and the information on functions set for the network port of the controllable device, with no need of setting different algorithmic logic corresponding to applications, thereby reducing types and number of controller boards, reducing the number of components on a controller board, and simplifying management and maintenance of the reactor protection system of the nuclear power plant.

It should be noted, that controller boards provided in embodiments of the present disclosure can be broadly applied to a special purpose reactor of a nuclear power plant such as a protection system for high temperature gas cooled reactors and other suitable types of reactors such as a common reactor type are also applicable.

Referring to FIG. 2, a flow chart of a control method for a reactor protection system of a nuclear power plant according to an embodiment of the present disclosure is presented.

The control method for the reactor protection system of the nuclear power plant according to the present embodiment includes the following steps.

Step S202, obtaining application information stored in a current controller board.

Wherein, the current controller board is used in a reactor protection system of a nuclear power plant, and the application information includes a unique address of a current controller board, information on controllable devices of the current controller board, and information on functions set by the current controller board for network ports of the controllable devices;

Wherein, the address of the current controller board is set by a DIP switch on a chassis. Once the setting is completed, it will not be easily modified later. The address set by the DIP switch can uniquely identify the current controller board as unique address of the current controller board.

The information on controllable devices of the current controller board is used to indicate devices which can be controlled by the current controller board, including a signal processing device, a logic compliance device, a channel monitoring device, a post-accident monitoring device, a channel monitoring display unit and a safety display device in the reactor protection system of the nuclear power plant.

Each control device has a corresponding network port. For a network port of a controllable device, the controller board further stores information on functions set for the network port of the controllable device, so that the controller board can set a function for the network port of the device on which the controller board resides according to the information.

Wherein, the functions set by the current controller for the network port of the controllable device include a receiving function and a transmitting function. The application information further includes source address information on a source device corresponding to the network port of the receiving function, and target address information on a target device corresponding to the network port of the transmitting function.

Step S204: after the current controller board is inserted into the controllable device, setting an address for the network port of the controllable device according to the unique address of the current controller board, and setting a function for the network port of the controllable device according to the information on the functions set for the network port of the controllable device.

Here, when an address for the network port of the controllable device is set according to the unique address of the current controller board, information on network ports of the controllable devices is first obtained. Then an address for the network port indicated by the information on the network ports is set according to the unique address of the current controller board, and a function for the network port indicated by the information on the network port is set according to the information on functions set for the network port of the controllable device.

Wherein the functions set by the current controller for the network port of the controllable device include a receiving function and a transmitting function. The application information further includes source address information on a source device corresponding to the network port of the receiving function, and target address information on a target device corresponding to the network port of the transmitting function. After a function is set for the network port of the controllable device according to the information on functions set for the network port of the controllable device, the method further includes receiving data from the source address via the network port for the receiving function, and transmitting data to the target address via the network port for the transmitting function.

Preferably, in the control method according to the present embodiment, the current controller board is used in a protection system of a special purpose reactor of a nuclear power plant but other suitable reactor type such as a common reactor type is also applicable.

According to the control method provided in embodiments of the present disclosure, a reactor protection system of a nuclear power plant integrates a platform and algorithmic logic corresponding to applications onto each controller board, on which application information on each controller board is stored, including a unique address of a current controller board, information on controllable devices of the current controller, and information on functions set by the current controller for the network ports of the controllable devices. By using a unique address, the current controller board can determine unique addresses for respective network ports of a controllable device according to the unique address of the current controller board, whenever the current controller board is inserted into any controllable device or is changed for any controllable device. By setting the information on functions for a network port of a controllable device, the functions of each network port of the controllable device can be reset after the current controller board is inserted, regardless of what functions are previously performed on the network port, such that the network ports are respectively utilized with flexibility. Based on the reassigned network port address and functions, on the one hand, when controller boards for channels of a protection system communicate with one another, the network port addresses and function definitions are guaranteed to be different, so that communication failure caused by conflicts in communication addresses are avoided; on the other hand, each controller board can perform address assignment and function setting for the network port of the current device according to the information on the controllable device and the information on functions set for the network port of the controllable device, with no need of setting different algorithmic logic corresponding to applications, thereby reducing types and number of controller boards, reducing the number of components on a controller board, and simplifying management and maintenance of the reactor protection system of the nuclear power plant.

It should be noted, that descriptions of steps in the control method according to the present embodiment are relatively concise. For related contents, foregoing embodiments of the controller board may be referred to.

The above method according to embodiments of the present disclosure may be implemented in hardware, firmware, or may be implemented as software or computer code that may be stored in a recording medium (such as a CD ROM, RAM, floppy disk, hard disk, or magneto-optical disk), or may be implemented as computer code that is to be stored in a local recording medium downloaded via a network which is originally stored on a remote recording medium or non-transitory machine-readable medium, so that the methods described herein can be executed with such software in the recording medium stored in a general purpose computer, a dedicated processor, or programmable or dedicated hardware (such as an ASIC or an FPGA). It may be appreciated that a computer, processor, microprocessor controller, or programmable hardware includes storage components (e.g., RAM, ROM, flash memory, etc.) that can store or receive software or computer code. When the software or computer code is accessed and executed by a computer, processor or hardware, the control method described herein is executed. In addition, when a general purpose computer is accessed to implement the control code illustrated herein, execution of the code converts the general purpose computer to a special purpose computer for performing the control illustrated herein.

Those with ordinary skills in the art will appreciate that elements and method steps of the various examples described in embodiments disclosed herein can be implemented in electronic hardware or a combination of computer software and electronic hardware. Whether these functions are performed in hardware or software depends on the specific application and design constraints of the technical solution. A person skilled in the art can use different methods to implement the described functions for each particular applicantion.

The above embodying modes are only used to describe embodiments of the present disclosure, while the scope of protection is defined by the claims.

## Claims

1. A controller board for a reactor protection system of a nuclear power plant, comprising:
a memory (102), configured for storing application information, wherein the application information comprises a unique address of the controller board, information on controllable devices of the controller board, and information on functions set by the controller board for a network port of the controllable devices;
a processor (104), configured for, after the controller board is inserted into a controllable device, setting an address for the network port of the controllable device according to the unique address of the controller board, and setting a function for the network port of the controllable device according to the information of functions set for the network port of the controllable device,
the functions set by the controller for the network port of the controllable device comprises a receiving function and a transmitting function;
the application information further comprises source address information on a source device corresponding to the network port of the receiving function, and target address information on a target device corresponding to the network port of the transmitting function;
the processor (104) is further configured for receiving data from the source address through the network port of the receiving function, and transmitting data to the target address through the network port of the transmitting function,
the processor (104) is configured for, obtaining information on the network port of the controllable device, after the controller board is inserted into the controllable device; and, setting an address for the network port indicated by the information on the network port according to the unique address of the controller board, and setting the function for the network port indicated by the information on the network port according to the information of functions set for the network port of the controllable device,
the processor (104) is configured to obtain relevant information on a device after the controller board is inserted into the device, and
whether the device is the controllable device of the controller board is determined according to the relevant information,
if yes, the address for the network port of the controllable device is set according to the unique address of the current controller board, and the function for the network port of the controllable device is set according to the information on functions set for the network port of the controllable device;
the controller board is configured to be that, addresses on the controller board corresponding with respective devices are determined, so that the controller board for each device is uniquely identified by the address, connection relationships between the respective network ports corresponding to respective devices are determined, whether the network port is used for transmitting or receiving is determined,
wherein, if the network port is used for transmitting, the target address of the network port downstream is to be determined, and if the network port is used for receiving, the source address of the network port upstream is to be determined.

2. The controller board according to claim 1, wherein the controllable device of the controller board comprises at least one of the following: a signal processing device, a logic compliance device, a channel monitoring device, a post-accident monitoring device, a channel monitoring display unit and a safety display device.

3. The controller board according to claim 1 or 2, wherein the controller board is used in a protection system of a special purpose reactor of the nuclear power plant.

4. A control method for a reactor protection system of a nuclear power plant, comprising:
obtaining application information stored in a controller board, wherein the controller board is used in the reactor protection system of a nuclear power plant, and the application information comprises a unique address of the controller board, information on controllable devices of the controller board, and information on functions set by the controller board for a
network port of the controllable devices;
after the controller board is inserted into a controllable device, setting an address for the network port of the controllable device according to the unique address of the controller board, and setting a function for the network port of the controllable device according to the information of functions set for the network port of the controllable device;
the functions set by the current controller for the network port of the controllable device comprise a receiving function and a transmitting function; the application information further comprises: source address information on a source device corresponding to the network port of the receiving function, and target address information on a target device corresponding to the network port of the transmitting function;
after setting the function for the network port of the controllable device according to the information of functions set for the network port of the controllable device, the method further comprises:
receiving data from the source address through the network port of the receiving function, and transmitting data to the target address through the network port of the transmitting function,
setting an address for the network port of the controllable device according to the unique address of the controller board comprises:
obtaining information on the network port of the controllable device;
setting an address for the network port indicated by the information on the network port according to the unique address of the controller board, and setting a function for the network port indicated by the information on the network port according to the information of functions set for the network port of the controllable device,
the processor (104) is configured to obtain relevant information on a device after the controller board is inserted into the device, and
whether the device is the controllable device of the controller board is determined according to the relevant information,
if yes, the address for the network port of the controllable device is set according to the unique address of the current controller board, and the function for the network port of the controllable device is set according to the information on functions set for the network port of the controllable device;
the controller board is configured to be that, addresses on the controller board corresponding with respective devices are determined, so that the controller board for each device is uniquely identified by the address, connection relationships between the respective network ports corresponding to respective devices are determined, whether the network port is used for transmitting or receiving is determined,
wherein, if the network port is used for transmitting, the target address of the network port downstream is to be determined, and if the network port is used for receiving, the source address of the network port upstream is to be determined.

5. The method according to claim 4, wherein the controllable device comprises at least one of the following: a signal processing device, a logic compliance device, a channel monitoring device, a post-accident monitoring device, a channel monitoring display unit and a safety display device.

6. The method according to claim 4 or 5, wherein the controller board is used in a protection system of a special purpose reactor of the nuclear power plant.

7. A reactor protection system of a nuclear power plant, including a plurality of controllable devices; and
a plurality of controller boards according to claim 1 or 2;
wherein protection system integrates the platform and algorithmic logic corresponding to the application onto the controller board, and
wherein each controller board stores information on controllable devices which it can control, and information about the functions set for network ports corresponding to each of the controllable devices.

## Patentansprüche

1. Steuerplatine für ein Reaktorschutzsystem eines Kernkraftwerks, die Folgendes umfasst:
einen Speicher (102), der zum Speichern von Anwendungsinformationen konfiguriert ist, wobei die Anwendungsinformationen eine eindeutige Adresse der Steuerplatine, Informationen über steuerbare Vorrichtungen der Steuerplatine und Informationen über Funktionen umfassen, die von der Steuerplatine für einen Netzwerkanschluss der steuerbaren Vorrichtungen eingestellt sind;
einen Prozessor (104), der konfiguriert ist, nach dem Einsetzen der Steuerplatine in eine steuerbare Vorrichtung, zum Einstellen einer Adresse für den Netzwerkanschluss der steuerbaren Vorrichtung gemäß der eindeutigen Adresse der Steuerplatine, und Einstellen einer Funktion für den Netzwerkanschluss der steuerbaren Vorrichtung gemäß den Informationen über Funktionen, die für den Netzwerkanschluss der steuerbaren Vorrichtung eingestellt sind,
wobei die von der Steuerung eingestellten Funktionen für den Netzwerkanschluss der steuerbaren Vorrichtung eine Empfangsfunktion und eine Sendefunktion umfassen;
die Anwendungsinformationen ferner Quelladressinformationen über eine Quellvorrichtung umfassen, die mit dem Netzwerkanschluss der Empfangsfunktion korrespondiert, und Zieladressinformationen über eine Zielvorrichtung, die mit dem Netzwerkanschluss der Sendefunktion korrespondiert;
der Prozessor (104) ferner konfiguriert ist zum Empfangen von Daten von der Quelladresse durch den Netzwerkanschluss der Empfangsfunktion und zum Senden von Daten an die Zieladresse durch den Netzwerkanschluss der Sendefunktion,
der Prozessor (104) zum Erhalten von Informationen über den Netzwerkanschluss der steuerbaren Vorrichtung konfiguriert ist, nachdem die Steuerplatine in die steuerbare Vorrichtung eingesetzt ist; und zum Einstellen einer Adresse für den Netzwerkanschluss, die durch die Informationen über den Netzwerkanschluss angezeigt wird, gemäß der eindeutigen Adresse der Steuerplatine, und zum Einstellen der Funktion für den Netzwerkanschluss, die durch die Informationen über den Netzwerkanschluss angezeigt wird, gemäß den Informationen über Funktionen, die für den Netzwerkanschluss der steuerbaren Vorrichtung eingestellt sind,
der Prozessor (104) dazu konfiguriert ist, relevante Informationen über eine Vorrichtung zu erhalten, nachdem die Steuerplatine in die Vorrichtung eingesetzt ist, und
ob es sich bei der Vorrichtung um die steuerbare Vorrichtung der Steuerplatine handelt, gemäß den relevanten Informationen bestimmt wird,
wenn ja, die Adresse für den Netzwerkanschluss der steuerbaren Vorrichtung gemäß der eindeutigen Adresse der aktuellen Steuerplatine eingestellt wird, und die Funktion für den Netzwerkanschluss der steuerbaren Vorrichtung gemäß den Informationen über die für den Netzwerkanschluss der steuerbaren Vorrichtung eingestellten Funktionen eingestellt wird;
die Steuerplatine dazu konfiguriert ist, dass Adressen auf der Steuerplatine, die mit jeweiligen Vorrichtungen korrespondieren, bestimmt werden, so dass die Steuerplatine für jede Vorrichtung eindeutig durch die Adresse identifiziert ist, Verbindungsbeziehungen zwischen den jeweiligen Netzwerkanschlüssen, die mit jeweiligen Vorrichtungen korrespondieren, bestimmt werden, ob der Netzwerkanschluss zum Senden oder zum Empfangen verwendet wird, bestimmt wird,
wobei, wenn der Netzwerkanschluss zum Senden verwendet wird, die Zieladresse des Netzwerkanschlusses stromabwärts zu bestimmen ist, und wenn der Netzwerkanschluss zum Empfangen verwendet wird, die Quelladresse des Netzwerkanschlusses stromaufwärts zu bestimmen ist.

2. Steuerplatine nach Anspruch 1, wobei die steuerbare Vorrichtung der Steuerplatine mindestens eine der folgenden umfasst: eine Signalverarbeitungsvorrichtung, eine Logikeinhaltungsvorrichtung, eine Kanalüberwachungsvorrichtung, eine Überwachungsvorrichtung nach einem Unfall, eine Kanalüberwachungsanzeigeeinheit und eine Sicherheitsanzeigevorrichtung.

3. Steuerplatine nach Anspruch 1 oder 2, wobei die Steuerplatine in einem Schutzsystem eines Spezialreaktors des Kernkraftwerks verwendet wird.

4. Steuerungsverfahren für ein Reaktorschutzsystem eines Kernkraftwerks, das Folgendes umfasst:
Erhalten von Anwendungsinformationen, die in einer Steuerplatine gespeichert sind, wobei die Steuerplatine in dem Reaktorschutzsystem eines Kernkraftwerks verwendet wird und die Anwendungsinformationen eine eindeutige Adresse der Steuerplatine, Informationen über steuerbare Vorrichtungen der Steuerplatine und Informationen über Funktionen umfassen, die von der Steuerplatine für einen Netzwerkanschluss der steuerbaren Vorrichtungen eingestellt sind;
nach dem Einsetzen der Steuerplatine in eine steuerbare Vorrichtung, Einstellen einer Adresse für den Netzwerkanschluss der steuerbaren Vorrichtung gemäß der eindeutigen Adresse der Steuerplatine, und Einstellen einer Funktion für den Netzwerkanschluss der steuerbaren Vorrichtung gemäß den Informationen von Funktionen, die für den Netzwerkanschluss der steuerbaren Vorrichtung eingestellt sind;
wobei die von der aktuellen Steuerung für den Netzwerkanschluss der steuerbaren Vorrichtung eingestellten Funktionen eine Empfangsfunktion und eine Sendefunktion umfassen; wobei die Anwendungsinformationen des Weiteren umfassen: Quelladresseninformationen über eine Quellvorrichtung, die mit dem Netzwerkanschluss der Empfangsfunktion korrespondiert, und Zieladresseninformationen über eine Zielvorrichtung, die mit dem Netzwerkanschluss der Sendefunktion korrespondiert;
wobei das Verfahren nach dem Einstellen der Funktion für den Netzwerkanschluss der steuerbaren Vorrichtung gemäß den Informationen über die für den Netzwerkanschluss der steuerbaren Vorrichtung eingestellten Funktionen des Weiteren umfasst:
Empfangen von Daten von der Quelladresse durch den Netzwerkanschluss der Empfangsfunktion und Senden von Daten an die Zieladresse durch den Netzwerkanschluss der Sendefunktion,
wobei das Einstellen einer Adresse für den Netzwerkanschluss der steuerbaren Vorrichtung gemäß der eindeutigen Adresse der Steuerplatine Folgendes umfasst:
Erhalten von Informationen über den Netzwerkanschluss der steuerbaren Vorrichtung;
Einstellen einer Adresse für den Netzwerkanschluss, die durch die Informationen über den Netzwerkanschluss gemäß der eindeutigen Adresse der Steuerplatine angezeigt wird, und Einstellen einer Funktion für den Netzwerkanschluss, die durch die Informationen über den Netzwerkanschluss gemäß den Informationen der Funktionen angezeigt wird, die für den Netzwerkanschluss der steuerbaren Vorrichtung eingestellt sind,
der Prozessor (104) dazu konfiguriert ist, relevante Informationen über eine Vorrichtung zu erhalten, nachdem die Steuerplatine in die Vorrichtung eingesetzt ist, und
ob es sich bei der Vorrichtung um die steuerbare Vorrichtung der Steuerplatine handelt, gemäß den relevanten Informationen bestimmt wird,
wenn ja, die Adresse für den Netzwerkanschluss der steuerbaren Vorrichtung gemäß der eindeutigen Adresse der aktuellen Steuerplatine eingestellt wird, und die Funktion für den Netzwerkanschluss der steuerbaren Vorrichtung gemäß den Informationen über die für den Netzwerkanschluss der steuerbaren Vorrichtung eingestellten Funktionen eingestellt wird;
die Steuerplatine dazu konfiguriert ist, dass Adressen auf der Steuerplatine, die mit jeweiligen Vorrichtungen korrespondieren, bestimmt werden, so dass die Steuerplatine für jede Vorrichtung eindeutig durch die Adresse identifiziert ist, Verbindungsbeziehungen zwischen den jeweiligen Netzwerkanschlüssen, die mit jeweiligen Vorrichtungen korrespondieren, bestimmt werden, ob der Netzwerkanschluss zum Senden oder zum Empfangen verwendet wird, bestimmt wird,
wobei, wenn der Netzwerkanschluss zum Senden verwendet wird, die Zieladresse des Netzwerkanschlusses stromabwärts zu bestimmen ist, und wenn der Netzwerkanschluss zum Empfangen verwendet wird, die Quelladresse des Netzwerkanschlusses stromaufwärts zu bestimmen ist.

5. Verfahren nach Anspruch 4, wobei die steuerbare Vorrichtung mindestens eine der folgenden umfasst: eine Signalverarbeitungsvorrichtung, eine Logikeinhaltungsvorrichtung, eine Kanalüberwachungsvorrichtung, eine Überwachungsvorrichtung nach einem Unfall, eine Kanalüberwachungsanzeigeeinheit und eine Sicherheitsanzeigevorrichtung.

6. Verfahren nach Anspruch 4 oder 5, wobei die Steuerplatine in einem Schutzsystem eines Spezialreaktors des Kernkraftwerks verwendet wird.

7. Reaktorschutzsystem eines Kernkraftwerks, das Folgendes beinhaltet
eine Vielzahl von steuerbaren Vorrichtungen; und
eine Vielzahl von Steuerplatinen nach Anspruch 1 oder 2;
wobei das Schutzsystem die Plattform und algorithmische Logik, die mit der Anwendung korrespondieren, in die Steuerplatine integriert, und
wobei jede Steuerplatine Informationen über steuerbare Vorrichtungen, die sie steuern kann, und Informationen über die Funktionen speichert, die für Netzwerkanschlüsse eingestellt sind, die mit den jeweiligen steuerbaren Vorrichtungen korrespondieren.

## Revendications

1. Carte de commande pour un système de protection de réacteur d'une centrale nucléaire, comprenant:
une mémoire (102), configurée pour stocker des informations d'application, dans laquelle les informations d'application comprennent une adresse unique de la carte de commande, des informations sur les dispositifs contrôlables de la carte de commande, et des informations sur les fonctions définies par la carte de commande pour un port réseau des dispositifs contrôlables;
un processeur (104), configuré pour, après l'insertion de la carte de commande dans un dispositif contrôlable, définir une adresse pour le port réseau du dispositif contrôlable en fonction de l'adresse unique de la carte de commande, et définir une fonction pour le port réseau du dispositif contrôlable en fonction des informations sur les fonctions définies pour le port réseau du dispositif contrôlable,
les fonctions définies par le contrôleur pour le port réseau du dispositif contrôlable comprennent une fonction de réception et une fonction de transmission;
les informations d'application comprennent en outre des informations d'adresse source sur un dispositif source correspondant au port réseau de la fonction de réception, et des informations d'adresse cible sur un dispositif cible correspondant au port réseau de la fonction de transmission;
le processeur (104) est en outre configuré pour recevoir des données provenant de l'adresse source via le port réseau de la fonction de réception, et pour transmettre des données vers l'adresse cible via le port réseau de la fonction de transmission,
le processeur (104) est configuré pour, obtenir des informations sur le port réseau du dispositif contrôlable, après l'insertion de la carte de commande dans le dispositif contrôlable; et, pour définir une adresse pour le port réseau indiquée par les informations sur le port réseau en fonction de l'adresse unique de la carte de commande, et pour définir la fonction pour le port réseau indiquée par les informations sur le port réseau en fonction des informations sur les fonctions définies pour le port réseau du dispositif contrôlable,
le processeur (104) est configuré pour obtenir des informations pertinentes sur un dispositif après l'insertion de la carte de commande dans le dispositif, et
il est déterminé si le dispositif est le dispositif contrôlable de la carte de commande en fonction des informations pertinentes,
si tel est le cas, l'adresse du port réseau du dispositif contrôlable est définie en fonction de l'adresse unique de la carte de commande actuelle, et la fonction du port réseau du dispositif contrôlable est définie en fonction des informations sur les fonctions définies pour le port réseau du dispositif contrôlable;
la carte de commande est configurée de telle sorte que les adresses sur la carte de commande correspondant aux dispositifs respectifs sont déterminées, afin que la carte de commande pour chaque dispositif soit identifiée de manière unique par l'adresse, les relations de connexion entre les ports réseau respectifs correspondant aux dispositifs respectifs sont déterminées, il est déterminé si le port réseau est utilisé pour la transmission ou la réception,
dans laquelle, si le port réseau est utilisé pour la transmission, l'adresse cible du port réseau en aval doit être déterminée, et si le port réseau est utilisé pour la réception, l'adresse source du port réseau en amont doit être déterminée.

2. Carte de commande selon la revendication 1, dans laquelle le dispositif contrôlable de la carte de commande comprend au moins l'un des éléments suivants: un dispositif de traitement de signal, un dispositif de conformité logique, un dispositif de surveillance de canal, un dispositif de surveillance post-accident, une unité d'affichage de surveillance de canal et un dispositif d'affichage de sécurité.

3. Carte de commande selon la revendication 1 ou 2, dans laquelle la carte de commande est utilisé dans un système de protection d'un réacteur à usage spécial d'une centrale nucléaire.

4. Procédé de commande pour un système de protection de réacteur d'une centrale nucléaire, comprenant:
l'obtention des informations d'application stockées dans une carte de commande, dans lequel la carte de commande est utilisée dans le système de protection du réacteur d'une centrale nucléaire, et les informations d'application comprennent une adresse unique de la carte de commande, des informations sur les dispositifs contrôlables de la carte de commande, et des informations sur les fonctions définies par la carte de commande pour un port réseau des dispositifs contrôlables;
après l'insertion de la carte de commande dans un dispositif contrôlable, définir une adresse pour le port réseau du dispositif contrôlable en fonction de l'adresse unique de la carte de commande, et définir une fonction pour le port réseau du dispositif contrôlable conformément aux informations sur les fonctions définies pour le port réseau du dispositif contrôlable;
les fonctions définies par le contrôleur actuel pour le port réseau du dispositif contrôlable comprennent une fonction de réception et une fonction de transmission; les informations d'application comprennent en outre: des informations d'adresse source sur un dispositif source correspondant au port réseau de la fonction de réception, et des informations d'adresse cible sur un dispositif cible correspondant au port réseau de la fonction de transmission;
après avoir défini la fonction pour le port réseau du dispositif contrôlable conformément aux informations sur les fonctions définies pour le port réseau du dispositif contrôlable, le procédé comprend en outre:
la réception des données provenant de l'adresse source via le port réseau de la fonction de réception, et la transmission des données vers l'adresse cible via le port réseau de la fonction de transmission,
l'attribution d'une adresse pour le port réseau du dispositif contrôlable en fonction de l'adresse unique de la carte de commande comprend:
l'obtention des informations sur le port réseau du dispositif contrôlable;
l'attribution d'une adresse pour le port réseau indiquée par les informations sur le port réseau en fonction de l'adresse unique de la carte de commande, et la définition d'une fonction pour le port réseau indiquée par les informations sur le port réseau conformément aux informations sur les fonctions définies pour le port réseau du dispositif contrôlable,
le processeur (104) est configuré pour obtenir des informations pertinentes sur un dispositif après l'insertion de la carte de commande dans le dispositif, et
il est déterminé si le dispositif est le dispositif contrôlable de la carte de commande en fonction des informations pertinentes,
si tel est le cas, l'adresse pour le port réseau du dispositif contrôlable est définie en fonction de l'adresse unique de la carte de commande actuelle, et la fonction pour le port réseau du dispositif contrôlable est définie conformément aux informations sur les fonctions définies pour le port réseau du dispositif contrôlable;
la carte de commande est configurée de telle sorte que les adresses sur la carte de commande correspondant aux dispositifs respectifs sont déterminées, afin que la carte de commande pour chaque dispositif soit identifiée de manière unique par l'adresse, les relations de connexion entre les ports réseau respectifs correspondant aux dispositifs respectifs sont déterminées, il est déterminé si le port réseau est utilisé pour la transmission ou la réception,
dans lequel, si le port réseau est utilisé pour la transmission, l'adresse cible du port réseau en aval doit être déterminée, et si le port réseau est utilisé pour la réception, l'adresse source du port réseau en amont doit être déterminée.

5. Procédé selon la revendication 4, dans lequel le dispositif contrôlable comprend au moins l'un des éléments suivants: un dispositif de traitement de signal, un dispositif de conformité logique, un dispositif de surveillance de canal, un dispositif de surveillance post-accident, une unité d'affichage de surveillance de canal et un dispositif d'affichage de sécurité.

6. Procédé selon la revendication 4 ou 5, dans lequel la carte de commande est utilisée dans un système de protection d'un réacteur à usage spécial de la centrale nucléaire.

7. Système de protection de réacteur d'une centrale nucléaire, comprenant
une pluralité de dispositifs contrôlables; et
une pluralité de cartes de commande selon la revendication 1 ou 2;
dans lequel le système de protection intègre la plate-forme et la logique algorithmique correspondant à l'application sur la carte de commande, et
dans lequel chaque carte de commande stocke des informations sur les dispositifs contrôlables qu'elle peut contrôler, et des informations sur les fonctions définies pour les ports réseau correspondant à chacun des dispositifs contrôlables.
